# EUROPÄISCHE PATENTANMELDUNG

(11) **EP 2 039 584 A1**
(43) Veröffentlichungstag der Anmeldung: **25.03.2009**
(21) Anmeldenummer: 07116769.6
(22) Anmeldetag: 19.09.2007
(51) Int. Cl.: B62B 1/22

(54) **Transportvorrichtung**

(71) Anmelder: Firepoint GmbH & Co. KG, 32289 Rödinghausen (DE)
(72) Erfinder: Ritzmann, Lutz H., 32257, Bünde (DE)
(74) Vertreter: Dantz, Jan Henning

(57) **Zusammenfassung**

Eine Transportvorrichtung (1) insbesondere für zerlegte Baumstämme, umfasst ein Gestell (2), an dem zumindest an einer Seite ein Griffteil (3, 4) angeordnet ist und das auf mindestens einem Rad (5) abgestützt ist. An dem Gestell (2) ist an gegenüberliegenden Seiten jeweils ein Halteelement (6) vorgesehen, in dem eine Schlaufe (16) eines Packelementes (7) herausnehmbar eingehängt ist. Die Transportvorrichtung kann somit auch in unwegsamen Gelände zerlegte Baumstämme transportieren.

## Beschreibung

Die vorliegende Erfindung betrifft eine Transportvorrichtung, insbesondere für zerlegte Baumstämme, mit einem Gestell, an dem zumindest an einer Seite ein Griffteil angeordnet ist und das auf mindestens einem Rad abgestützt ist.

Es ist bekannt, dass schwere Gegenstände, wie zerlegte Baumstämme in unwegsamen Gelände schwierig zu transportieren sind. So können die entasteten und meist auf ca. einen Meter Länge abgeschnittenen Baumstämme über Seilwinden gezogen werden, bis ein Waldweg erreicht wird, auf dem dann motorisierte Fahrzeuge eingesetzt werden dürfen. Da die Baumstämme nur selten auf direktem Weg herausgezogen werden können, weil zahlreiche Bäume im Weg stehen und der Boden uneben ist, muss diese Methode als aufwendig und wenig effektiv angesehen werden.

Es sind Packzangen bekannt, mittels denen zwei Männer an gegenüberliegenden Seiten ein Ende des Baumstammes befestigen und diesen dann anheben und über das unebene Gelände tragen. Dies ist angesichts des Gewichtes und der Bodenbeschaffenheit ebenfalls sehr mühsam.

Herkömmliche Transport- oder Schiebekarren sind ebenfalls ungeeignet, denn die Baumstämme können nicht entsprechend befestigt werden und die Räder sind für einen unebenen Boden nicht geeignet. Aufgrund der stark variierenden Gewichtskräfte besteht zudem das Problem, dass der Schwerpunkt für den Transport vorgegeben ist.

Die DE 10 2005 034 313 zeigt eine als Sack- oder Schubkarre verwendbare Transportkarre, die ein veränderbares Gestell aufweist, so dass sowohl ein Einsatz als Transportkarre als auch als Schubkarre möglich ist. Für einen Transport von schweren Gegenständen in unwegsamen Gelände ist diese Transportkarre jedoch nicht geeignet, da die Räder zu klein sind und zudem die Gegenstände auf der Ladefläche befestigt werden müssen. Je nach Beladung der Transportkarre kann ein Bewegen durch einen Benutzer auch zu schwer sein.

Es ist daher Aufgabe der vorliegenden Erfindung eine Transportvorrichtung zu schaffen, mit der auch schwere Gegenstände in unwegsamen Gelände gut transportiert werden können.

Diese Aufgabe wird mit einer Transportvorrichtung mit den Merkmalen des Anspruches 1 gelöst.

Erfindungsgemäß ist an dem Gestell der Transportvorrichtung an gegenüberliegenden Seiten jeweils ein Halteelement vorgesehen, an dem eine Schlaufe eines Packelementes herausnehmbar eingehängt ist. Dadurch müssen schwere Gegenstände nicht mehr auf eine Ladefläche gehievt und dort befestigt werden, sondern die Packelemente können den Gegenstand halten, der dann an dem Gestell aufgehängt wird. Dadurch wird der Transport vereinfacht, da der zu transportierende Gegenstand nur geringfügig angehoben werden muss, um dann durch die Transportvorrichtung bewegt zu werden. Das Rad der Transportvorrichtung kann dabei vergleichsweise groß ausgebildet sein, so dass es auch in unwegsamen und unebenen Gelände einfach bewegt werden kann. Denn die zu transportierenden Gegenstände müssen nicht mehr auf das Gestell angehoben werden, sondern werden unterhalb des Gestelles hängend vorgesehen.

Gemäß einer bevorzugten Ausgestaltung der Erfindung wird mittels den Packelementen ein zu transportierender Gegenstand unterhalb des Gestells benachbart zu dem mindestens einen Rad hängend angeordnet. Das Packelement kann beispielsweise als Packzange ausgebildet sein, mittels dem ein zerlegter Baumstamm einfach angehoben und dann über die Schlaufe der Packzange eingehangen wird.

Vorzugsweise ist die Position des mindestens einen Rades relativ zu dem Gestell verstellbar ausgebildet. Dadurch kann je nach Beladung der Transportvorrichtung das Rad verstellt werden, um abhängig vom Schwerpunkt und Gewicht des zu transportierenden Gegenstandes eine optimale Transportsituation zu schaffen. An dem Gestell kann dabei mindestens eine Schiene festgelegt sein, um das Rad entlang der Schiene horizontal zu verstellen. Es ist auch möglich, eine vertikale Verstellbarkeit des Rades vorzusehen, so dass auch unterschiedlich große Gegenstände leicht zu transportieren sind.

Gemäß einer weiteren Ausgestaltung der Erfindung ist an gegenüberliegenden Seiten des Gestells jeweils ein Griffteil vorgesehen. Denn wegen der Unfallgefahr dürfen im Wald immer nur zwei Leute zusammenarbeiten. Bei der Vorsehung zweier Griffteile können somit zwei Personen die Transportvorrichtung bewegen. Dabei können die Griffteile jeweils in unterschiedlichen Winkelpositionen an dem Gestell fixiert werden. Die Lage des Griffteils kann dabei abhängig von der Größe und der Armlänge des Benutzers gewählt werden. Zudem können so auch Unebenheiten oder Anstiege im Gelände gut bewältigt werden. Wenn an gegenüberliegenden Seiten die Griffteile angehoben werden, kann auch der zu transportierende Gegenstand mit der Transportvorrichtung über Hindernisse bewegt werden. Für eine einfache Handhabung kann dabei jedes Griffteil zwei voneinander beabstandete Handgriffe aufweisen.

Um die Transportvorrichtung in unbenutztem Zustand einfach abstellen zu können, sind vorzugsweise an dem Gestell an einer Seite Stützfüße zum bodenseitigen Abstellen vorgesehen. Die Stützfüße können dabei integral mit dem Gestell ausgebildet sein, so dass eine Auflage durch die beiden Stützfüße und das mindestens eine Rad gesichert ist.

Für einen stabilen Aufbau der Transportvorrichtung ist das Gestell als Rahmen mit Querstreben ausgebildet. Dabei kann auf dem Gestell auch ein Aufsatz montiert werden, beispielsweise zum Transport von Werkzeug oder um eine ebene Arbeitsfläche auszubilden.

Gemäß einer weiteren Ausgestaltung der Erfindung sind an gegenüberliegenden Seiten jeweils zwei Halteelemente vorgesehen, so dass mit der Transportvorrichtung auch zwei zerlegte Baumstämme transportiert werden können. Dabei ist an gegenüberliegenden Seiten des Rades jeweils ein Baumstamm bzw. jeweils zwei Halteelemente vorgesehen.

Die Erfindung wird nachfolgend anhand eines Ausführungsbeispieles mit Bezug auf die beigefügten Zeichnungen näher erläutert. Es zeigen:

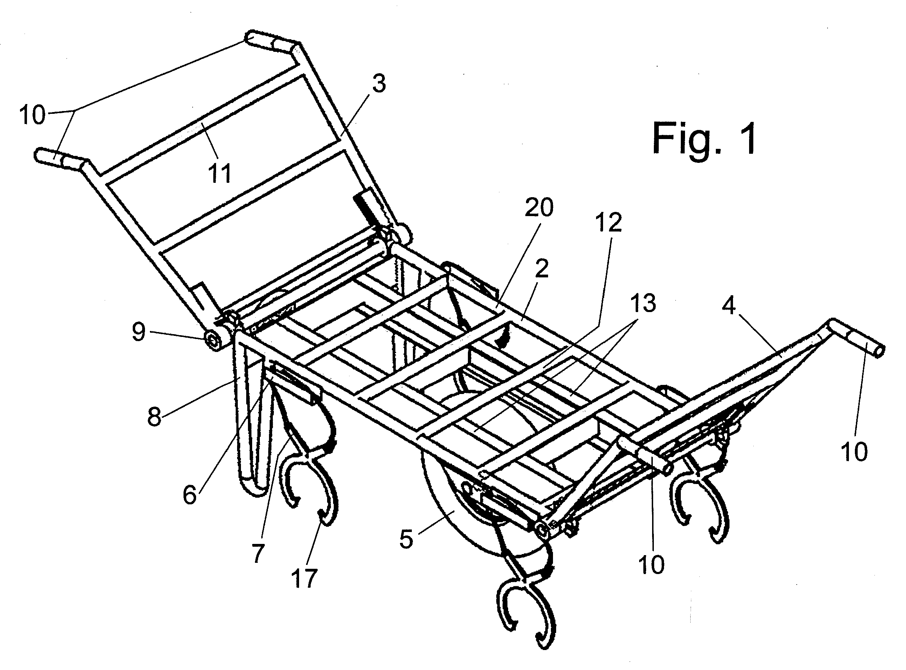

- Figur 1: eine perspektivische Ansicht einer erfindungsgemäßen Transportvorrichtung;

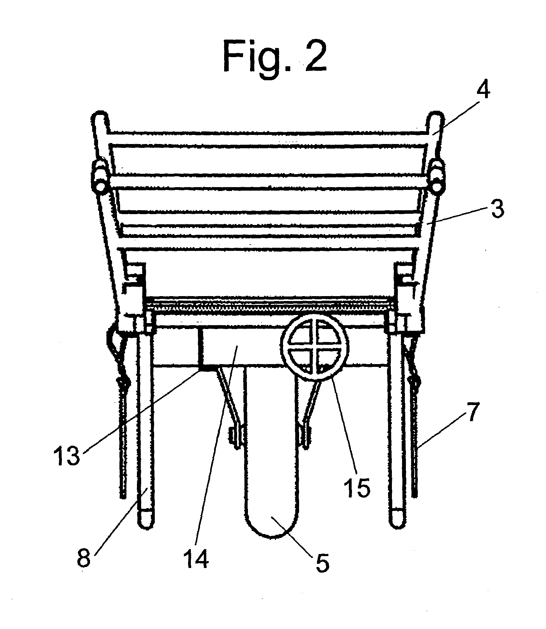

- Figur 2: eine Vorderansicht der Transportvorrichtung der Figur 1;

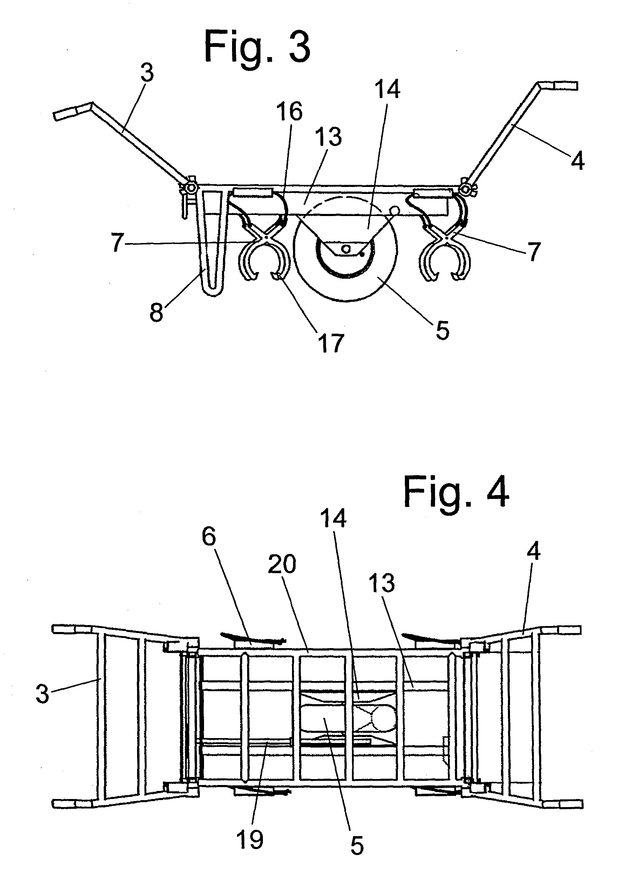

- Figur 3: eine Seitenansicht der Transportvorrichtung der Figur 1;
- Figur 4: eine Draufsicht der Transportvorrichtung der Figur 1, und

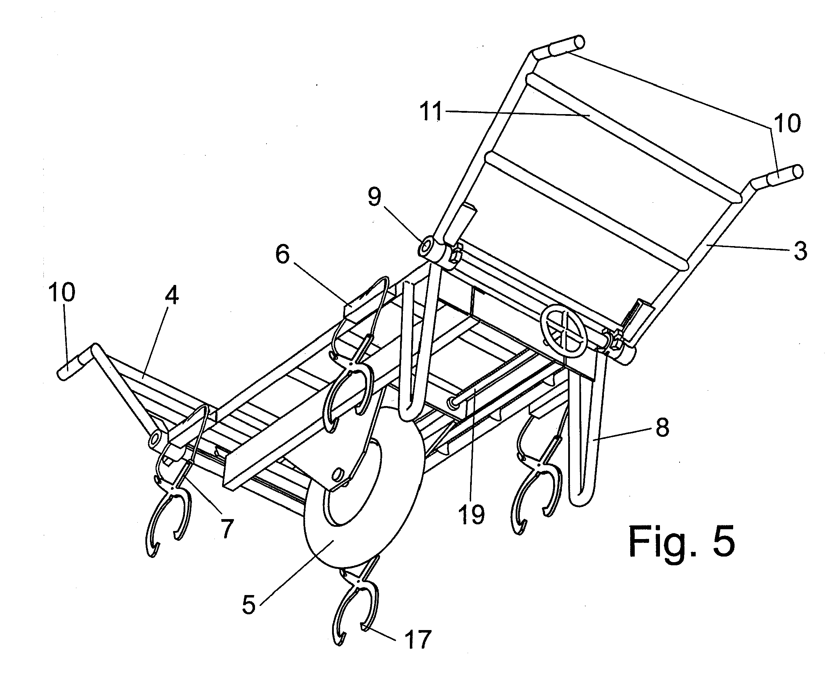

- Figur 5: eine perspektivische Unteransicht der Transportvorrichtung der Figur 1.

Eine Transportvorrichtung 1 umfasst ein Gestell 2, das rahmenförmig ausgebildet ist und mehrere Querstreben 12 zur Verstärkung aufweist. An einer Seite des Gestells ist ein Griffteil 3 und an der gegenüberliegenden Seite ein Griffteil 4 vorgesehen, wobei die Griffteile 3 und 4 verschwenkbar an dem Gestell 2 gelagert sind und in unterschiedlichen Winkelpositionen fixiert werden können. Unter dem Gestell 2 ist ein Rad 5 zur Abstützung vorgesehen, wobei das Rad 5 ein elastisches Vollprofil oder einen aufblasbaren Schlauch umfassen kann.

An gegenüberliegenden Längsstreben 20 des Gestells sind jeweils leistenförmige Halteelemente 6 angebracht, die im Querschnitt U-förmig ausgebildet sind und in die eine Schlaufe 16 eines Packelementes 7 eingehängt werden kann. Dabei sind an jeder Seite des Gestells 2 jeweils zwei Halteelemente 6 vorgesehen, so dass auf jeder Seite des Rades 5 ein zu transportierender Gegenstand aufgehängt werden kann.

Wenn die Transportvorrichtung 1 nicht bewegt wird, kann diese auf Stützfüßen 8 abgestellt werden, die an einer Seite des Gestells 2 nach unten hervorstehen.

Die Griffteile 3 und 4 sind über eine Achse 9 an dem Gestell 2 gelagert, wobei ein entsprechender Rast- und Feststellmechanismus vorgesehen ist, um die Griffteile 3 und 4 in der gewünschten Winkelstellung festzulegen. Jedes Griffteil 3 umfasst zwei voneinander beabstandete Handgriffe 10, die über Querstreben 11 miteinander verbunden sind.

Unterhalb des Gestells 2 sind Schienen 13 vorgesehen, die sich parallel zu den Längsstreben 20 erstrecken. Dabei ist ein Schlitten 14 zwischen den beiden Schienen 13 verschiebbar gelagert, wobei hierfür ein Spindelmechanismus vorgesehen ist, der über ein Handrad 15 verstellbar ist. Durch Drehen einer Spindel 19 wird der Schlitten 14 entlang der Schienen 13 verschoben.

### Die Funktionsweise der Transportvorrichtung ist wie folgt:

Ein zu transportierender Baumstamm wird über die Packelemente 7 bewegt, wobei die Zangen 17 der Packelemente 7 an gegenüberliegenden Seiten des Baumstammes festgelegt werden. Der zerlegte Baumstamm wird dann unter dem Gestell 2 der Transportvorrichtung 1 hergezogen und an gegenüberliegenden Seiten geringfügig angehoben, so dass jeweils eine Schlaufe 16 des Packelementes 7 in das Halteelement 6 eingehangen wird und der Baumstamm über dem Boden hängend angeordnet ist. Je nachdem ob ein oder zwei Baumstämme transportiert werden sollen und welches Gewicht ein entsprechender Baumstamm besitzt, kann die Position des Rades 5 über die Spindelvorrichtung verstellt werden. Abhängig vom Schwerpunkt der Transportvorrichtung 1 mit dem zu transportierenden Gegenstand kann so eine optimale Position des Rades 5 eingestellt werden.

Anschließend werden die Griffteile 3 und 4 in die gewünschte Position gebracht, je nachdem, wie das Gelände aussieht, in dem die Transportvorrichtung 1 bewegt werden soll und wie groß die Bedienpersonen sind. Beispielswiese können die Griffteile 3 und 4 nahezu parallel zu dem Gestell 2 angeordnet werden, wenn das Gestell 2 angehoben werden muss. Falls dieses nur schiebend oder ziehend bewegt wird, werden die Griffteile 3 und 4 in einer gewissen Schrägstellung festgelegt. Dadurch können ein oder mehrere zerlegte Baumstämme aus einem Waldgebiet zu einem befahrbaren Waldweg transportiert werden.

Bei dem gezeigten Ausführungsbeispiel ist das Rad 5 über eine Spindelvorrichtung in Längsrichtung entlang der Schienen 13 verstellbar ausgebildet. Es ist natürlich auch möglich, eine Höhenverstellung an dem Schlitten 14 vorzusehen, um auch unterschiedlich hohe Gegenstände transportieren zu können. Zudem ist es möglich, statt einem mittigen Rad 5 auch mehrere Räder 5 an einem Schlitten 14 vorzusehen, so dass eine größere Gewichtsverteilung stattfindet.

Statt einer mechanischen Verstellvorrichtung kann auch ein motorischer Antrieb vorgesehen werden, um das Rad 5 horizontal und/oder vertikal zu verstellen. Zudem kann auch das Rad 5 selbst durch einen Antrieb mitbewegt werden. Wird bei der Transportvorrichtung nur ein Griffteil 3 benötigt, kann das zweite Griffteil 4 eingeschoben oder demontiert werden.

Statt den Zangen 17 können auch andere Befestigungselemente an den Packelementen 7 vorgesehen sein, beispielsweise Riemen. Zudem kann an den Packelementen eine Verstelleinrichtung zum Hochziehen der Gegenstände vorgesehen sein.

Auf dem Gestell 2 kann zudem ein Aufsatz montiert sein. Dabei können an dem Gestell 2 nach oben offen zwei oder mehr Befestigungsrohre vorgesehen sein, auf die dann ein Aufsatz aufgesteckt wird. Der Aufsatz kann Fächer für Werkzeuge, wie eine Motorsäge, Benzin oder sonstige Arbeitsmaterialien besitzen. Zudem kann der Aufsatz eine ebene Arbeitsfläche aufweisen, um als Arbeitsfläche zu dienen. Hierbei kann die ebene Arbeitsfläche auch eine abgekantelte Umrandung aufweisen, damit etwaige Gegenstände auf der Arbeitsfläche nicht herabfallen können.

## Patentansprüche

1. Transportvorrichtung (1) insbesondere für zerlegte Baumstämme, mit einem Gestell (2), an dem zumindest an einer Seite ein Griffteil (3, 4) angeordnet ist und das auf mindestens einem Rad (5) abgestützt ist, **dadurch gekennzeichnet, dass** an dem Gestellt (2) an gegenüberliegenden Seiten jeweils ein Halteelement (6) vorgesehen ist, in dem eine Schlaufe (16) eines Packelementes (7) herausnehmbar eingehängt ist.

2. Transportvorrichtung nach Anspruch 1, **dadurch gekennzeichnet, dass** mittels den Packelementen (7) ein zu transportierender Gegenstand unterhalb des Gestells (2) benachbart zu dem mindestens einen Rad (5) hängend angeordnet ist.

3. Transportvorrichtung nach Anspruch 1 oder 2, **dadurch gekennzeichnet, dass** die Position des mindestens einen Rades (5) relativ zu dem Gestell (2) verstellbar ausgebildet ist.

4. Transportvorrichtung nach Anspruch 3, **dadurch gekennzeichnet, dass** an dem Gestell (2) mindestens eine Schiene (13) festgelegt ist und das Rad (5) entlang der Schiene (13) verstellbar gehalten ist.

5. Transportvorrichtung nach einem der Ansprüche 1 bis 4, **dadurch gekennzeichnet, dass** an gegenüberliegenden Seiten des Gestells (2) jeweils ein Griffteil (3, 4) vorgesehen ist.

6. Transportvorrichtung nach einem der Ansprüche 1 bis 5, **dadurch gekennzeichnet, dass** das Griffteil (3, 4) in unterschiedlichen Winkelpositionen an dem Gestell (2) fixierbar ist.

7. Transportvorrichtung nach einem der Ansprüche 1 bis 6, **dadurch gekennzeichnet, dass** jedes Griffteil (3, 4) zwei voneinander beabstandete Handgriffe (10) aufweist.

8. Transportvorrichtung nach einem der Ansprüche 1 bis 7, **dadurch gekennzeichnet, dass** an dem Gestell (2) an einer Seite Stützfüße (8) zum bodenseitigen Abstellen vorgesehen sind.

9. Transportvorrichtung nach einem der Ansprüche 1 bis 8, **dadurch gekennzeichnet, dass** das Gestell als Rahmen mit Querstreben (12) ausgebildet ist.

10. Transportvorrichtung nach einem der Ansprüche 1 bis 9, **dadurch gekennzeichnet, dass** an gegenüberliegenden Seiten jeweils zwei Halteelemente (6) vorgesehen sind.

11. Transportvorrichtung nach einem der Ansprüche 1 bis 10, **dadurch gekennzeichnet, dass** die Halteelemente (6) als U-förmige Leisten ausgebildet sind.

12. Transportvorrichtung nach einem der Ansprüche 1 bis 11, **dadurch gekennzeichnet, dass** an dem Gestell (2) ein Aufsatz zum Transport von Werkzeug und/oder als Arbeitsfläche vorgesehen ist.
